# EUROPEAN PATENT SPECIFICATION

(11) **EP 4 371 042 B1**
(45) Date of publication and mention of the grant of the patent: **02.09.2026**
(21) Application number: 22879594.4
(22) Date of filing: 15.07.2022
(51) Int. Cl.: G02F 1/01, G06N 10/00, H01S 3/00, G02F 1/33, G02B 6/02, G06N 10/20, G06N 10/40

(54) **DISPERSIVE OPTICS FOR SCALABLE RAMAN DRIVING OF HYPERFINE QUBITS**
DISPERSIVE OPTIK ZUR SKALIERBAREN RAMAN-ANSTEUERUNG HYPERFEINER QUBITS
OPTIQUES DISPERSIFS POUR L'EXCITATION RAMAN MODULABLE DE BITS QUANTIQUES HYPERFINS

(30) Priority: 16.07.2021 US 202163222791 P
(43) Date of publication of application: 22.05.2024
(73) Proprietor: President and Fellows of Harvard College, Cambridge, MA 02138 (US); Massachusetts Institute of Technology, Cambridge, MA 02139 (US)
(72) Inventor: LEVINE, Harry Jay, Cambridge, MA 02139 (US); BLUVSTEIN, Dolev, Cambridge, MA 02138 (US); KEESLING CONTRERAS, Alexander, Cambridge, MA 02138 (US); SEMEGHINI, Giulia, Cambridge, MA 02138 (US); EBADI, Sepehr, Cambridge, MA 02138 (US); WANG, Tout, Cambridge, MA 02138 (US); OMRAN, Ahmed, Cambridge, MA 02138 (US); LUKIN, Mikhail D., Cambridge, MA 02138 (US); GREINER, Markus, Cambridge, MA 02138 (US); VULETIC, Vladan, Cambridge, MA 02139 (US)
(74) Representative: Peterreins Schley
(86) International application number: PCT/US2022/037325
(87) International publication number: WO 2023/080936

(56) References cited:
- EP-B1- 1 171 968
- US-A1- 2002 089 718
- US-A1- 2004 126 114
- US-A1- 2020 185 120
- KAWANISHI S ET AL: "Optical Pulse Generator Using Phase Modulator and Linearly Chirped Fiber Bragg Gratings", IEEE PHOTONICS TECHNOLOGY LETTERS, IEEE, USA, vol. 17, no. 8, 1 August 2005 (2005-08-01), pages 1746 - 1748, XP011136691, ISSN: 1041-1135, DOI: 10.1109/LPT.2004.842377
- GLEBOV LEONID ET AL: "Volume-chirped Bragg gratings: monolithic components for stretching and compression of ultrashort laser pulses", OPTICAL ENGINEERING, SOCIETY OF PHOTO-OPTICAL INSTRUMENTATION ENGINEERS, 1000 20TH ST. BELLINGHAM WA 98225-6705 USA, vol. 53, no. 5, 1 May 2014 (2014-05-01), pages 51514, XP060048497, ISSN: 0091-3286, [retrieved on 20140206], DOI: 10.1117/1.OE.53.5.051514
- LEVINE HARRY JAY: "Quantum Information Processing and Quantum Simulation with Programmable Rydberg Atom Arrays", PHD THESIS, 30 April 2021 (2021-04-30), XP093066586, Retrieved from the Internet <URL:https://dash.harvard.edu/entities/publication/89b62d26-37ba-468f-9a61-e21dc038b375> [retrieved on 20230724]
- ALAN E WILLNER ET AL: "Optics and Photonics: Key Enabling Technologies", PROCEEDINGS OF THE IEEE, IEEE. NEW YORK, US, vol. 100, no. 13, 13 May 2012 (2012-05-13), pages 1604 - 1643, XP011455512, ISSN: 0018-9219, DOI: 10.1109/JPROC.2012.2190174

## Description

### CROSS-REFERENCE TO RELATED APPLICATIONS

### BACKGROUND OF THE INVENTION

A quantum bit (qubit) is the fundamental building block for a quantum computer. In analogy with 'classical bits' which are used to store information in traditional computers (each bit is 0 or 1), qubits can occupy two distinct states labeled |0> and |1>, or any quantum superposition of the two states. In some applications, single qubits need to be individually manipulated. Improving methods of single qubit manipulation is important to improving the capabilities of quantum computers.

### SUMMARY OF THE INVENTION

In one example embodiment, the present invention is a device for modulating an amplitude of a light beam. The device comprises a coherent light source configured to generate a phase-modulated beam having a plurality of frequency components; and a dispersive optical element selected from a chirped Bragg grating (CBG), a chirped Bragg mirror (CBM), or an overcoupled optical resonator. The dispersive optical element has a group delay dispersion and is configured to receive the phase-modulated beam, to introduce an optical phase shift to each of the plurality of the frequency components, wherein the values of the optical phase shift vary non-linearly with frequency according to the group delay dispersion, and to recombine the plurality of frequency components, thereby generating an amplitude-modulated beam.

In another example embodiment, the present invention is a quantum computer device, comprising a source of particles; a confinement system configured to generate a plurality of confinement regions to hold a plurality of particles therein, the particles having a first quantum state; an excitation source for generating an amplitude-modulated beam and directing the amplitude-modulated beam at at least one particle in the plurality of particles, thereby driving transitions of the at least one particle between the first quantum state and a second quantum state; and an observing system for determining the states of the plurality of particles. The excitation source comprises a coherent light source configured to generate a phase-modulated beam having a plurality of frequency components, and a dispersive optical element. The dispersive optical element has a group delay dispersion and is configured to receive the phase-modulated beam, and to introduce an optical phase shift to each of the plurality of the frequency components, wherein the values of the optical phase shift vary non-linearly with frequency according to the group delay dispersion, and to recombine the plurality of frequency components, thereby generating the amplitude-modulated beam.

In another embodiment, the present invention is a method of modulating an amplitude of a light beam, comprising generating a coherent phase-modulated light beam having a plurality of frequency components; directing the phase-modulated beam at a dispersive optical element selected from a chirped Bragg grating (CBG), a chirped Bragg mirror (CBM), or an overcoupled optical resonator, the dispersive optical element having a group delay dispersion, thereby introducing an optical phase shift to each of the plurality of the frequency components, wherein the values of the optical phase shift vary non-linearly with frequency according to the group delay dispersion; and recombining the plurality of frequency components, thereby generating an amplitude-modulated beam.

In another embodiment, the present invention is a method of operating a quantum computer device. The method comprises generating a plurality of confinement regions holding a plurality of particles therein, the particles having a first quantum state; generating an amplitude-modulated beam; directing the amplitude-modulated beam at at least one particle of the plurality of particles, thereby driving transitions of the at least one particle of the plurality of particles between the first quantum state and a second quantum state; and determining the states of the plurality of particles. Generating the amplitude-modulated beam comprises: generating a coherent phase-modulated light beam having a plurality of frequency components; directing the phase-modulated beam at a dispersive optical element, the dispersive optical element having a group delay dispersion, thereby introducing an optical phase shift to each of the plurality of the frequency components, wherein the values of the optical phase shift vary non-linearly with frequency according to the group delay dispersion; and recombining the plurality of frequency components, thereby generating the amplitude-modulated beam.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
**FIG. 1** is a schematic diagram illustrating conversion of a phase-modulated constant-amplitude coherent beam into an amplitude-modulated beam, where the resulting beam demonstrates "beats" of amplitude with an adjustable period 1/ω_{q}.
**FIG. 2A** is a schematic diagram of stimulated Raman transitions in a A-type 3-level system employed by the devices and methods described herein.
**FIG. 2B** is a schematic diagram showing the relevant level structure for ⁸⁷Rb, including the 5S_{1/2} ground state (containing two 'clock' states |0> = |F = 1; m_{F} = 0> and |1> = |F = 2; m_{F} = 0>) and the excited state 5P_{1/2} state which mediates the stimulated Raman transition.
**FIG. 2C** presents tabulated results of a comparison of methods for converting phase modulation to amplitude modulation, including the methods described herein.
**FIG. 3A** is a schematic diagram showing the optical train of the devices disclosed herein.
**FIG. 3B** is a plot showing that the amplitude modulation depends on both the dispersion of the dispersive element and the phase modulation depth.
**FIG. 3C** is a plot of amplitude modulation as a function of detuning, demonstrating the effect associated with non-uniform dispersion.
**FIG. 3D** is a schematic diagram illustrating an overcoupled optical resonator and its operating principle as applied to the method described herein.
**FIG. 4A** is an image of a sample array's fluorescing.
**FIG. 4B** is a collection of two images showing Rabi oscillations, averaged over each row individually (upper panel) or over just the middle four rows (lower panel).
**FIG. 4C** is a plot showing the results of measuring the number of pulses that can be applied before scattering from the Raman laser causes T₁-type decay.
**FIG. 5A** is a plot showing the results of a Ramsey measurement, where atoms are placed in a superposition of |0> and |1> using a π/2 pulse and held for variable amounts of time before a final π/2 pulse.
**FIG. 5B** is a plot demonstrating dynamical decoupling sequence using XY16-256, with a total of 256 π-pulses. The final π/2 pulse is applied about +x (red) or -x (blue).
**FIG. 6** is a schematic view of an apparatus for quantum computation according to embodiments of the present disclosure.

### DETAILED DESCRIPTION OF THE INVENTION

A description of example embodiments of the invention follows.

The present disclosure describes embodiments relating to quantum computing.

### Oubits

Bits and qubits are abstract mathematical ideas that are encoded in the state of real physical systems. For example, a clasasical bit (0 or 1) may be encoded in whether a capacitor is charged or discharged, or whether a switch is 'on' or 'off'.

Quantum bits are encoded in quantum systems with two (or more) distinct quantum states. There are many such physical realizations that are being explored worldwide. One example is based on individual particles such as atoms, ions, or molecules which are isolated in vacuum. These isolated atoms, ions, and molecules have many distinct quantum states that correspond to different orientations of electron spins, nuclear spins, electron orbits, and molecular rotations / vibrations. In principle, a qubit may be encoded in any pair of quantum states of the atom/ion/molecule. In practice, a key parameter of qubits is described by their 'quantum coherence properties'. This essentially measures the lifetime of the qubit before its information is lost. It has a close analogy with classical bits: if you prepare a classical bit in the 0 state, then after some time it may randomly be flipped to 1 due to environmental noise. Quantum mechanically, the same error may occur: |0> may randomly flip to |1> after some characteristic timescale. However, qubits may suffer from additional errors: for example, a superposition state (|0> +|1>) / √2 may randomly flip to (|0> - |1>) / √2. In real quantum computers, the qubits must be encoded in quantum states which have long coherence properties.

Quantum computers generally can contain many qubits, each encoded in its own atom/molecule/ion/etc. Beyond simply containing the qubits, the quantum computer should be able to (1) initialize the qubits, (2) manipulate the state of the qubits in a controlled way, and (3) read out the final states of the qubits. When it comes to manipulation of the qubits, this is usually broken down into two types: one type of qubit manipulation is a so-called 'single-qubit gate', which means an operation that is applied individually to a qubit. This may, for example, flip the state of the qubit from |0> to |1>, or it may take |0> to a superposition state (|0> + |1>)/42. The second necessary type of qubit manipulation is a 'multi-qubit gate', which acts collectively on two or more qubits and can be used to entangle different qubits. A multi-qubit gate is realized through some form of interaction between the qubits. The various quantum computing platforms *(i.e.,* various physical encodings of qubits) rely on different physical mechanisms both for single-qubit gates as well as multi-qubit gates which depend on the physical system that is storing the qubit.

Improving the performance of both single-qubit gates and multi-qubit gates is important to improving the capabilities of quantum computers long term. Disclosed herein is an improved method that can be used for performing single-qubit gates in a particular type of qubit encoding. The disclosed method can be used in neutral atom quantum computers, ion-based quantum computers, and molecular quantum computers. This method may also be useful for performing multi-qubit gates in some situations, including with trapped ions.

### Manipulation of Qubits

The disclosed method is applicable in contexts where a qubit is encoded in two near-ground-state energy levels of an atom, ion, or molecule. An example of this is a so-called 'hyperfine qubit'. Such a qubit is encoded in two electronic ground states that differ by the relative orientation of the nuclear spin with respect to the outer electron spin. Pairs of such states can be chosen so that they are particularly robust / insensitive to environmental perturbations, leading to long coherence times. These states are split in energy by the hyperfine interaction energy of the atom/ion/molecule, which is the interaction energy between the nuclear spin and the electron spin. The robustness of the qubit can be understood as the energy splitting between the two states being particularly stable - for this reason, such states are called 'clock states' because the stable energy splitting can form an excellent frequency-reference and as such forms the basis for atomic clocks. Typical hyperfine splitting between these qubit states is in the 1 - 13 GHz frequency range.

To perform single-qubit gates on such a 'hyperfine qubit', it is possible to apply coherent microwave radiation at the exact frequency of the energy splitting between states. However, there are two drawbacks to this approach. First, microwaves cannot be applied to just one qubit without affecting adjacent qubits. This is because qubits are encoded in particles that are typically just a few microns apart from one another, and microwaves cannot be focused to such a small scale due to their large wavelength. Second, the microwave intensity is fairly limited and as such the maximum speed of single-qubit gates is correspondingly limited.

An alternative approach is based on stimulated Raman transitions. In this case, a laser field is applied to the atoms/ions/molecules. The laser field is nearly (but not exactly) resonant with an optical transition from one of the ground states to an optically excited state. The laser contains multiple frequency components separated in frequency by exactly the amount equal to the hyperfine splitting of the qubit. The atom/ion/molecule can absorb a photon from one frequency component and coherently emit into a different frequency component, and in doing so it changes its state. This approach benefits from the capability of focusing the laser field onto individual particles in the quantum computer; the laser field can also be applied with high intensity, allowing much faster gate operations.

The method disclosed hereinbelow permits using a phase-modulated laser to stimulate Raman transitions in a particle (atom/ion/molecule). This method is applicable to any of these implementations of a quantum computer.

### Neutral Atom Quantum Computer

Neutral atom quantum computers encode qubits in individual neutral atoms. The neutral atoms are trapped in a vacuum chamber and levitated by trapping lasers. Most commonly, the trapping lasers are individual optical tweezers, which are individual tightly focused laser beams that trap an individual atom at the focus. Alternatively, individual atoms may be trapped in an 'optical lattice', which is formed from standing waves of laser light which produces a periodic structure of nodes / antinodes. A typical approach for encoding a qubit in neutral atoms is the hyperfine qubit approach, in which two ground states split by several GHz form the qubit. The method disclosed hereinbelow permits performing single-qubit gates on neutral atoms.

Multi-qubit gates in neutral atom quantum computers are realized using a third atomic state, which is a highly-excited Rydberg state. When one atom is excited to a Rydberg state, neighboring atoms are prevented from being excited to the Rydberg state. This 'conditional' behavior forms the basis for multi-qubit gates, such as a controlled-NOT gate. The Rydberg state is used temporarily to mediate the multi-qubit gate, and then the atoms are returned back from the Rydberg state to the ground state levels to preserve their coherence.

### Trapped Ion Quantum Computer

Trapped ion quantum computers use atomic species that are ionized, meaning they have a net charge. In most cases, many ions are trapped in one large trapping potential formed by electrodes in a vacuum chamber. The ions are pulled to the minimum of the trapping potential, but inter-ion Coulomb repulsion causes them to form a crystal structure centered in the middle of the trapping potential. Most commonly, the ions arrange into a linear chain. Other ways to trap ions are also possible, such as using optical tweezers, or trapping ions individually with local electric fields with a more complex on-chip electrode structure.

Qubits are encoded in trapped ions in multiple ways. One common approach is to use ground-state hyperfine levels, as described for neutral atoms. In trapped ions with hyperfine-qubit encoding, as with neutral atoms, single-qubit gates may use microwave radiation or stimulated Raman transitions. The new method described herein offers a new way to perform stimulated Raman transitions.

Unlike in neutral atoms, trapped ion hyperfine qubits rely heavily on stimulated Raman transitions for performing multi-qubit gates. There are two key concepts here: one is that stimulated Raman transitions may be used to control both the hyperfine state of the ion but also to change the motional state of the ion *(i.e.,* add momentum). This can be understood as absorbing a photon moving in one direction and emitting a photon in a different direction, such that the difference in photon momentum is absorbed by the ion. Since many ions are often trapped in one collective trapping potential and are mutually repelling one another, changing the motional state of one ion affects other ions in the system, and this mechanism forms the basis for multi-qubit gates. The current invention is applicable for performing stimulated Raman transitions for this purpose.

### Molecular Quantum Computer

Quantum computers based on individual molecules are earlier on in their development than trapped ions and neutral atoms. Multiple ways of encoding qubits in trapped molecules are being explored, such as using two different nuclear spin states or two different rotational states. Stimulated Raman transitions could be a useful tool for performing single-qubit gates in these qubit encodings, and as such the current invention may be relevant. Multi-qubit gates between molecules may be realized by exciting molecules to a third state (analogous to the Rydberg state in neutral atoms), where this third state exhibits strong interactions with neighbors due to polar properties of the molecule.

### A General Quantum Computer

According to various embodiments, individual particles (atoms/ions/molecules) can first be trapped in an array and arranged into particular configurations. Next, one or more particles are prepared in a desired quantum state. Quantum circuits can then be implemented by a sequence of qubit operations acting on individual qubits (single-qubit gates) or on groups of two or more qubits (multi-qubit gates). Finally, the state of the particles can be read out in order to observe the result of the quantum circuit. The readout can be accomplished using an observation system that typically includes an electron-multiplied CCD (EMCCD) camera image to detect particles' loaded positions, and a second camera image to read out the particles' final states by, for example, detecting fluorescence emitted by the particles in their final states.

### New Method of Stimulating Raman Transitions

As explained above, in quantum computing there is a need for driving Raman transitions between two distinct ground states. These transitions can be driven either by microwave sources or optical lasers. Microwave sources have a number of disadvantages. First, the Rabi frequencies typically achieved by microwave radiation are on the order of tens to hundreds of kHz. Such slow manipulation of qubits risks decoherence (in time on the order of hundreds of milliseconds). Second, microwave radiation cannot be focused on individual trapped atoms.

Driving Raman transitions using an optical laser offers advantages. Rabi frequencies can be reached (on the MHz scale) that are much higher than those achievable by microwave radiation. Optical manipulation is therefore fast (in time less than 1 µs), which also mitigates the impact of the qubit decoherence time (on the order of hundreds of milliseconds). Using optical lasers to drive the transitions also enables addressing each trapped atom individually. However, driving such Raman transitions requires a beam whose amplitude is modulated at a very high frequency (e.g., the "clock frequency" of ⁸⁷Rb, 6,834,682,610.904 Hz). Achieving such high-frequency amplitude modulation (AM) in a laser is challenging. Although mode-locked frequency comb lasers may be used, where pairs of frequency components combine to drive Raman transitions, the frequency offsets must be actively stabilized to the hyperfine frequency. Yet another approach is based on phase modulation of a single laser to produce low-noise sidebands at the hyperfine frequency. While experimentally convenient, this approach necessitates additional interferometric filtering to suppress destructive interference between sideband pairs, requiring both active stabilization as well as loss of optical power.

A new method for driving Raman transitions has now been discovered. This method is based on phase-modulating a coherent beam, followed by directing the coherent beam to a highly dispersive optical element. The dispersive element, for example, a chirped Bragg grating (CBG), changes the relative phases of the phase-modulated sidebands, converting destructive interference to constructive interference to produce amplitude modulation. Other dispersive elements, such as a chirped Bragg mirror, an overcoupled optical resonator, or a photonic integrated circuit are also potentially suitable. The new method offers high-efficiency conversion from phase modulation to amplitude modulation, enables scaling to high optical power, and is passively stable.

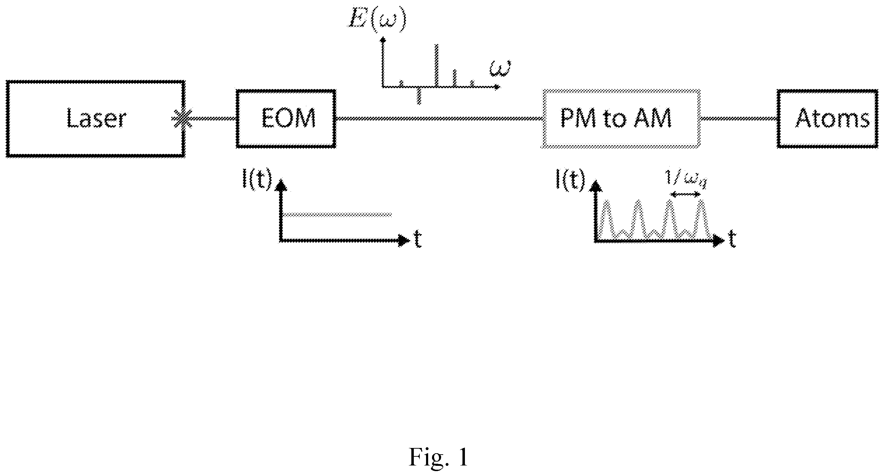

The novel method is illustrated in **Fig. 1****,** which is a high-level schematic diagram illustrating a laser system for driving stimulated Raman transitions. As can be seen, a constant-amplitude coherent beam is phase-modulated (by, e.g., an electro-optical modulator (EOM)), directed at a highly dispersive element ("PM to AM"), where the resulting beam emerges having "beats" of amplitude with an adjustable period 1/ω_{q}, where ω_{q} is the angular frequency corresponding to the hyperfine transition being stimulated.

As shown in **Fig. 1****, a** laser source is phase modulated by an electro-optic modulator (EOM), introducing sidebands in the spectrum E(ω) (upper inset) while maintaining a constant intensity I(t) (lower left inset). An optical system "PM to AM" converts the phase modulation (PM) to amplitude modulation (AM), where the resulting beam demonstrates "beats" of amplitude with an adjustable period 1/ω_{q} (lower right inset). The resulting amplitude-modulated light illuminates the atoms and drives stimulated Raman transitions for single-qubit gates.

Accordingly, in a first example embodiment, the present invention is a device for modulating an amplitude of a light beam, comprising a coherent light source configured to generate a phase-modulated beam having a plurality of frequency components; a dispersive optical element selected from a chirped Bragg grating (CBG), a chirped Bragg mirror (CBM), or an overcoupled optical resonator. In a first aspect of the first example embodiment, the dispersive optical element has a group delay dispersion, the dispersive optical element is configured to receive the phase-modulated beam, to introduce an optical phase shift to each of the plurality of the frequency components, so that the values of the optical phase shift vary non-linearly with frequency according to the group delay dispersion, and to recombine the plurality of frequency components, thereby generating an amplitude-modulated beam.

In a second example embodiment, the present invention is a quantum computer device, comprising a source of particles; a confinement system configured to generate a plurality of confinement regions to hold a plurality of particles therein, the particles having a first quantum state; an excitation source for generating an amplitude-modulated beam and directing the amplitude-modulated beam at at least one particle in the plurality of particles, thereby driving transitions of the at least one particle between the first quantum state and a second quantum state; and an observing system for determining the states of the plurality of particles.

In a first aspect of the second example embodiment, the excitation source comprises a coherent light source configured to generate a phase-modulated beam having a plurality of frequency components; and a dispersive optical element. The dispersive optical element has a group delay dispersion. The dispersive optical element is configured to receive the phase-modulated beam, to introduce an optical phase shift to each of the plurality of the frequency components, so that the values of the optical phase shift vary non-linearly with frequency according to the group delay dispersion, and to recombine the plurality of frequency components, thereby generating the amplitude-modulated beam.

In one aspect of the 2^{nd} example embodiment, the dispersive optical element is selected from an optical fiber, a photonic crystal fiber, a chirped Bragg grating (CBG), a chirped Bragg mirror (CBM), or an overcoupled optical resonator.

As used herein, the term "particle" refers to any physical object that can be used to encode a qubit, such as an atom, an ion, or a suitable molecule.

It will be understood that any of the above-enumerated dispersive optical elements has an operational bandwidth, and that the specific example of the dispersive element is selected so that the center of this bandwidth approximately coincides with the wavelength of the light source.

In a 2^{nd} aspect of either the 1^{st} or the 2^{nd} example embodiment, the device further includes a reflective element configured to direct the amplitude-modulated beam at the optically dispersive element, thereby amplifying the frequency-dependent group delay. The remainder of features and example features of the 2^{nd} aspect is as described above with respect to the 1^{st} aspect of the 1^{st} and 2^{nd} example embodiments.

In a 3^{rd} aspect of either the 1^{st} or the 2^{nd} example embodiment, the coherent light source comprises a monochromatic coherent light source and an electro-optical modulator. The remainder of features and example features of the 3^{rd} aspect is as described above with respect to the 1^{st} through 2^{nd} aspects of the 1^{st} and 2^{nd} example embodiments.

In a 4^{th} aspect of the 2^{nd} example embodiment, the coherent light source is configured to direct the amplitude-modulated beam at at least two particles of the plurality of particles. The remainder of features and example features of the 4^{th} aspect of the 2^{nd} example embodiment is as described above with respect to the 1^{st} through 3^{rd} aspects of the 2^{nd} example embodiment.

In a 5^{th} aspect of the 2^{nd} example embodiment, the coherent light source is configured to direct the amplitude-modulated beam at a single particle of the plurality of particles. The remainder of features and example features of the 5^{th} aspect of the 2^{nd} example embodiment is as described above with respect to the 1^{st} through 4^{th} aspects of the 2^{nd} example embodiment.

In a 3^{rd} example embodiment, the present invention is a method of modulating an amplitude of a light beam. The method comprises generating a coherent phase-modulated light beam having a plurality of frequency components; directing the phase-modulated beam at a dispersive optical element selected from a chirped Bragg grating (CBG), a chirped Bragg mirror (CBM), or an overcoupled optical resonator, and recombining the plurality of frequency components, thereby generating an amplitude-modulated beam. In a 1^{st} aspect of the 3^{rd} example embodiment, the dispersive optical element have a group delay dispersion, thereby introducing an optical phase shift to each of the plurality of the frequency components, so that the values of the optical phase shift vary non-linearly with frequency according to the group delay dispersion.

In a 4^{th} example embodiment, the present invention is a method of operating a quantum computer device. The method comprises generating a plurality of confinement regions holding a plurality of particles therein, the particles having a first quantum state; generating an amplitude-modulated beam; directing the amplitude-modulated beam at at least one particle of the plurality of particles, thereby driving transitions of the at least one particle of the plurality of particles between the first quantum state and a second quantum state; and determining the states of the plurality of particles. In a 1^{st} aspect of the 4^{th} example embodiment, generating the amplitude-modulated beam comprises generating a coherent phase-modulated light beam having a plurality of frequency components; directing the phase-modulated beam at a dispersive optical element, and recombining the plurality of frequency components, thereby generating the amplitude-modulated beam. The dispersive optical element has a group delay dispersion, thereby introducing an optical phase shift to each of the plurality of the frequency components, so that the values of the optical phase shift vary non-linearly with frequency according to the group delay dispersion.

In one aspect of the 4^{th} example embodiment, the dispersive optical element is selected from an optical fiber, a photonic crystal fiber, a chirped Bragg grating (CBG), a chirped Bragg mirror (CBM), or an overcoupled optical resonator. The remainder of features and example features of the 4^{th} example embodiment is as described above.

In a 2^{nd} aspect of either the 3^{rd} or the 4^{th} example embodiment, the method further includes directing the amplitude-modulated beam at the optically dispersive element, thereby amplifying the frequency-dependent group delay. The remainder of features and example features of the 2^{nd} aspect of either the 3^{rd} or the 4^{th} example embodiments is as described above with respect to the 1^{st} aspect of the 3^{rd} and the 4^{th} example embodiments.

In a 3^{rd} aspect of either the 3^{rd} or the 4^{th} example embodiment, the method further comprises generating a monochromatic coherent light beam; directing the monochromatic coherent light beam at an electro-optical modulator; and modulating the phase of the monochromatic coherent light beam. The remainder of features and example features of the 3^{rd} aspect of the 3^{rd} and 4^{th} example embodiments is as described above with respect to the 1^{st} through 2^{nd} aspects of these embodiment.

In a 4^{th} aspect of the 4^{th} example embodiment, the amplitude-modulated beam is directed at at least two particles of the plurality of particles. The remainder of features and example features of the 4^{th} aspect of the 4^{th} example embodiment is as described above with respect to the 1^{st} through 3^{rd} aspects of the 4^{th} embodiment.

In a 5^{th} aspect of the 4^{th} example embodiment, the amplitude-modulated beam is directed at a single particle of the plurality of particles. The remainder of features and example features of the 5^{th} aspect of the 4^{th} example embodiment is as described above with respect to the 1^{st} through 4^{th} aspects of the 4^{th} embodiment.

### EXEMPLIFICATION

### Amplitude modulation and stimulated Raman transitions

First, stimulated Raman transitions are analyzed for a general drive field which couples both hyperfine qubit states to an excited state. Assume the drive field has some bandwidth that is comparable to or larger than the hyperfine frequency *ω_{q} =* 2*π* * 6.836 *GHz,* but small compared to the detuning from the excited state Δ, such as a bandwidth of 2*π* * 28 *GHz* for a detuning Δ = 2*π* * 100 *GHz.* While the canonical approach to evaluating the Raman Rabi frequency in this setup is to consider each pair of frequency components in the drive field with frequency difference *ω_{q},* it shall be understood that an equivalent interpretation is to consider only the amplitude modulation of the laser field, as would be measured on a photodetector, without considering its electric field spectrum. This interpretation simplifies understanding of Raman laser systems, and offers a simple way to compare various approaches.

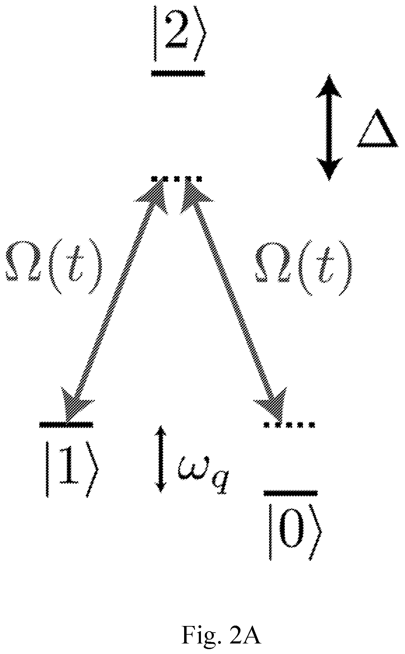

Consider first a three-level Λ system (see **Fig. 2A****,** described below), with two ground levels |0〉 and |1〉 each coupled to a mutual excited state |2〉.

Take both couplings to be driven by the same general laser field with single-photon Rabi frequency Ω(*t*). This system is described by the following Hamiltonian, given in the rotating frame for the excited state |2〉: $\begin{matrix}H = {ℏω}_{q} \left|1\right〉 \left〈1\right| + ℏ Δ \left|2\right〉 \left〈2\right| \\ - \frac{ℏ Ω \left(t\right)}{2} \left(\left|2\right〉\left〈0\right|+\left|2\right〉\left〈1\right|\right) + h . c\end{matrix}$

If the intermediate detuning Δ of the driving laser field is large compared to Ω(*t*) and the laser bandwidth, the excited state can be adiabatically eliminated, resulting in an effective two-level Hamiltonian for states |0) and |1): ${H}_{TLS} = {ℏω}_{q} \left|1\right〉 \left〈1\right| - \frac{ℏ {Ω}_{TLS} \left(t\right)}{2} \left|1\right〉 \left〈0\right| + h . c$ with an effective coupling ${Ω}_{TLS} \left(t\right) = \frac{{\left|Ω\left(t\right)\right|}^{2}}{2 Δ}$

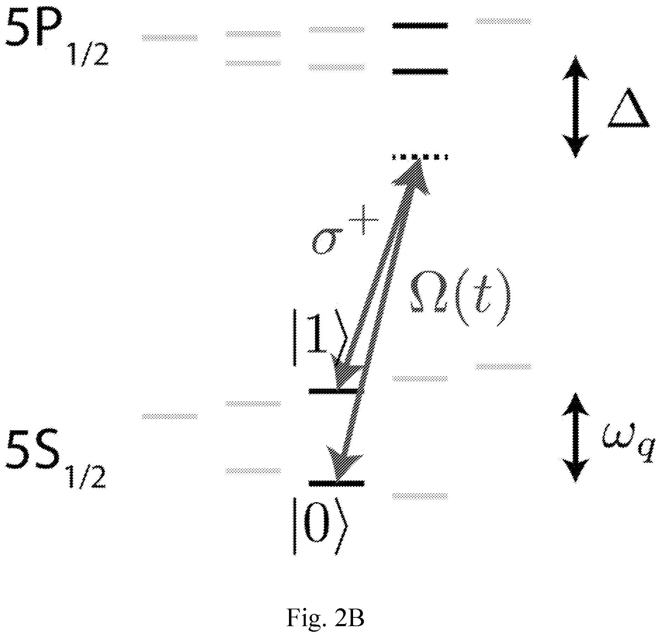

Note that the Hamiltonian from Equation describes a two-level system (TLS) with splitting *ω_{q}* and time-dependent coupling Ω*_{TLS}* ∝ |Ω(*t*)|². From this description, it is apparent that the *intensity* of the laser field produces an effective field which couples the two qubit states; amplitude modulation of the laser field at the qubit frequency therefore drives the qubit transition, akin to resonant driving of a spin transition directly using microwaves. Interestingly, in real atoms *(i.e.,* level structure for ⁸⁷Rb as shown in **Fig. 2B****,** described below), the "effective field" which is proportional to the laser intensity is the *fictitious magnetic field* associated with vector light shifts. Specifically, an off-resonant laser field induces vector light shifts which act as a fictitious magnetic field given by *B^{fict}* ∝ *Im*[*ε** × *ε*], where *ε* is the polarization vector of the laser field. For circularly polarized light, *i.e., ε₊* = *x̂ + iŷ,* the resulting fictitious field is oriented along *ẑ*. The off-resonant laser, therefore, introduces an effective magnetic field along the *ẑ* axis, which couples *π*-polarized spin transitions - and thus laser amplitude modulation is equivalent to *π*-polarized microwave radiation.

The connection between this interpretation and standard formulations summing over pairs of frequency components is cleanly illustrated by considering a field with regularly spaced frequency components, described by Ω(*t*) = Ω₀ Σ*ₙ aₙe^{inωt}* with normalized component amplitudes such that Σ*ₙ*|*aₙ*|² = 1. For such a field, the intensity modulates at all harmonics of the sideband spacing according to the sum of amplitude pairs: ${\left|Ω\left(t\right)\right|}^{h} = {\left|{Ω}_{0}\right|}^{2} {\sum }_{k} {e}^{ikωt} \left[{\sum }_{n} {a}_{n}^{∗} {a}_{n + k}\right]$

The intensity modulation at the qubit frequency, driven by the term *e^{iω^{qt}}* (corresponding to *k* = 1 if the component spacing is *ω* = *ω_{q}*) is given by the usual expression for combined Raman Rabi frequency with many contributing pairs of components: ${Ω}_{eff} = \frac{{\left|{Ω}_{0}\right|}^{2}}{2 Δ} {\sum }_{n} {a}_{n}^{∗} {a}_{n + 1}$

Importantly, for a field with a fixed amount of total power (characterized by |Ω₀|²), the amount of amplitude modulation is determined by how the power is distributed among frequency components, and their relative phases. This can be encapsulated in the amplitude modulation efficiency, ${η}^{AM} ≡ \left|{\sum }_{n} {a}_{n}^{∗} {a}_{n + 1}\right|$. Laser fields with a higher amplitude modulation efficiency have a higher ratio of Raman Rabi frequency (given by amplitude modulation) to optical scattering from the intermediate state |2〉 (given by the average optical power). Amplitude modulation efficiency is bounded above by *η^{AM} <* 1, where this bound is approached as the power is distributed among more and more sidebands, as in mode-locked frequency comb lasers. On the other hand, the canonical formulation with power split into two frequency components has efficiency *η^{AM}* = 1/2. The quantity η_{AM} presented here offers a convenient metric for comparing various approaches for producing Raman laser systems.

**Figs. 2A-2C** illustrate amplitude modulation for driving Raman transitions. **Fig. 2A** is a schematic diagram of stimulated Raman transitions in a A-type 3-level system, with qubit states |0> and |1> (split by frequency ω_{q} ) and an intermediate excited state |2>. A laser field couples both |0> and |1> to |2> with a time-dependent coupling characterized by a Rabi frequency *Ω*(*t*). Adiabatic elimination of the excited state results in an effective Raman coupling between ground states |0) and |1〉.

**Fig. 2B** is a schematic diagram showing the relevant level structure for ⁸⁷Rb, including the 5S_{1/2} ground state (containing two 'clock' states |0> = |F = 1; m_{F} = 0> and |1> = |F = 2; m_{F} = 0>) and the excited state 5P_{1/2} state which mediates the stimulated Raman transition. Other excited states such as 5P_{3/2} are not shown and do not participate in the process. The laser field is *σ*⁺ polarized with a time-dependent Rabi frequency Ω(*t*) to couple both qubit states |0> and |1> to two particular excited levels within 5P_{1/2}, which are the |F=2, m_{F}=1> and |F=1,m_{F}=1> states. The laser field is detuned by Δ from the excited state; Δ typically is on the order of 100 GHz; it should be much larger than the hyperfine frequency 6.8 GHz, but much less than the 7 THz energy gap between 5P_{1/2} and 5P_{3/2}.

While laser amplitude modulation is necessary for Raman driving, the most accessible form of high-frequency laser modulation is *phase modulation* using electro-optics. One can see that phase modulation alone is insufficient for driving Raman transitions by considering sinusoidal phase modulation, which produces frequency sidebands according to the Jacobi-Anger expansion: $Ω \left(t\right) = {Ω}_{0} {e}^{iβ sin ωt} = {Ω}_{0} {\sum }_{n = - ∞}^{∞} {J}_{n} \left(β\right) {e}^{inωt}$

where *Jₙ* are Bessel functions of the first kind, *β* is the *modulation depth,* and *ω* is the modulation frequency. Since the laser intensity is constant (|*Ω*(*t*)|² = |*Ω*₀|²), a phase-modulated laser cannot resonantly drive hyperfine qubits. This can be seen also as destructive interference between pairs of adjacent sidebands: ${\sum }_{n = - ∞}^{∞} {J}_{n} \left(β\right) * {J}_{n + 1} \left(β\right) = 0$.

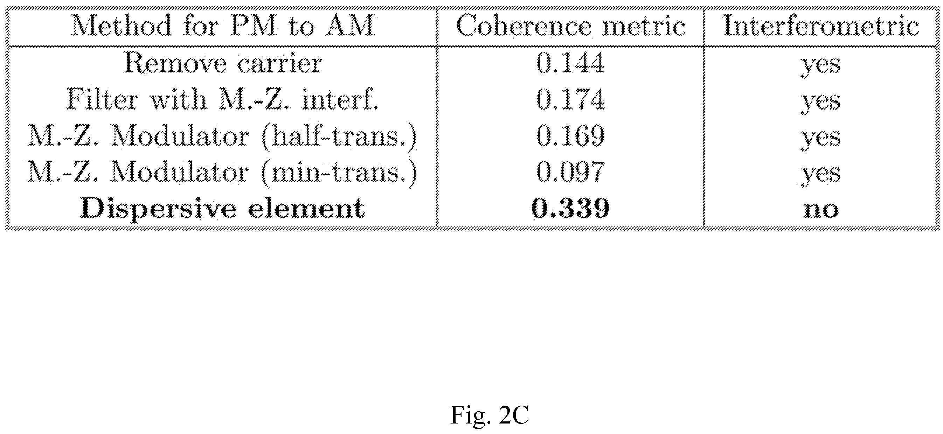

There are several methods for modifying the sideband spectrum of a phase-modulated laser to produce amplitude modulation. These methods are primarily interferometric in nature, since they act selectively on frequency components with only gigahertz scale separation. For example, one approach is to use a Fabry-Perot cavity to filter out the carrier (*n* = 0) spectral component. Another method is to use a Mach-Zehnder interferometer to filter out all odd-order sidebands. Yet another approach is a Mach-Zehnder intensity modulator, in which the phase modulation occurs in one arm of an interferometer. These approaches are inherently inefficient, in that they discard some portion of the laser light by filtering out components, and they are sensitive to path length fluctuations on wavelength scales. (Some fiber-based versions of these systems can be more robust, but they are limited to low optical power.) A coherence metric is defined to compare the achievable Rabi frequency relative to off-resonant scattering rate for each approach, assuming that they start with the same initial optical power (see Fig. 2C).

**FIG. 2C** presents tabulated results of a comparison of methods for converting phase modulation to amplitude modulation, including the methods described herein. The dispersive approach is shown to have a higher coherence metric, indicating its promise for higher-fidelity operations, as well as to be non-interferometric in such a way that it is more passively stable than other approaches.

### Converting phase modulation to amplitude modulation with dispersive optics

Rather than filtering out specific spectral components from the phase modulation spectrum, consider here an approach to change the relative phases of these spectral components using dispersive optics. Consider in particular a dispersive element that has a nonzero group-delay dispersion (GDD), defined as $GDD = \frac{{\partial }^{2} φ}{\partial {ω}^{2}}$. This element imparts a phase shift to frequency components which is *quadratic* in their frequency; that is, the values of the optical phase shift vary non-linearly (e.g., quadratically) with frequency according to the group delay dispersion, and the dispersive element produces a modified electric field of the form $Ω \left(t\right) = {Ω}_{0} {\sum }_{n = - ∞}^{∞} {J}_{n} \left(β\right) {e}^{inωt} {e}^{{iαn}^{2}}$ where *α = GDD* · *ω*²/2 describes the phase curvature as a function of sideband index. The resulting amplitude modulation efficiency depends simply on the phase modulation depth *β* and the dispersion curvature *α* according to a Bessel function identity: ${η}^{AM} = \left|{J}_{1}\left(2β sin α\right)\right|$

For an optimal *βsinα* = 0.92 rad, the efficiency is maximized at *J*₁(2*βsinα*) = 0.582, surpassing the efficiency of the standard bichromatic drive (*η^{AM} =* 1/2). However, in practice, electro-optic phase modulation depth is limited to *β* ≲ *π,* requiring *α* ≳ *π*/4 to achieve reasonable efficiency; this corresponds to an enormously large dispersion of *GDD* ≳ 8.5 × 10⁸ *fₛ*². For comparison, dispersion in a typical optical fiber is 4 × 10⁴ *fs*²/*meter*. Even ultra-high-dispersion chirped Bragg mirrors (mirrors with gradually varying Bragg layer thickness) offer only up to 1300 *fs*² from a single reflection.

Recently, new optical elements based on *volumetric* Bragg gratings have enabled a new level of frequency selectivity and dispersion control. These crystals have a weak modulation in their refractive index over a lengthscale of ~ 1 *cm.* Devices for which the index modulation wavelength changes as a function of depth have highly dispersive properties. A chirped volumetric Bragg grating with *GDD* = 4 × 10⁸ *fs*² (OptiGrate, CBG-795-95) was used in the experiments. Reflecting twice from the grating doubles the dispersive effect to a *GDD of 8* × 10⁸ *fs*², thus enabling an optimal amplitude modulation efficiency with an easily accessible phase modulation depth *β* ~ 1.3 *rad.* Moreover, the dispersive element does not waste optical power by filtering out components, and it is passively stable: ultimately, it serves as an element which passively converts phase modulation to amplitude modulation, so the effective Raman Rabi frequency (phase, amplitude, and frequency) are inherited from the microwave source of the phase modulator.

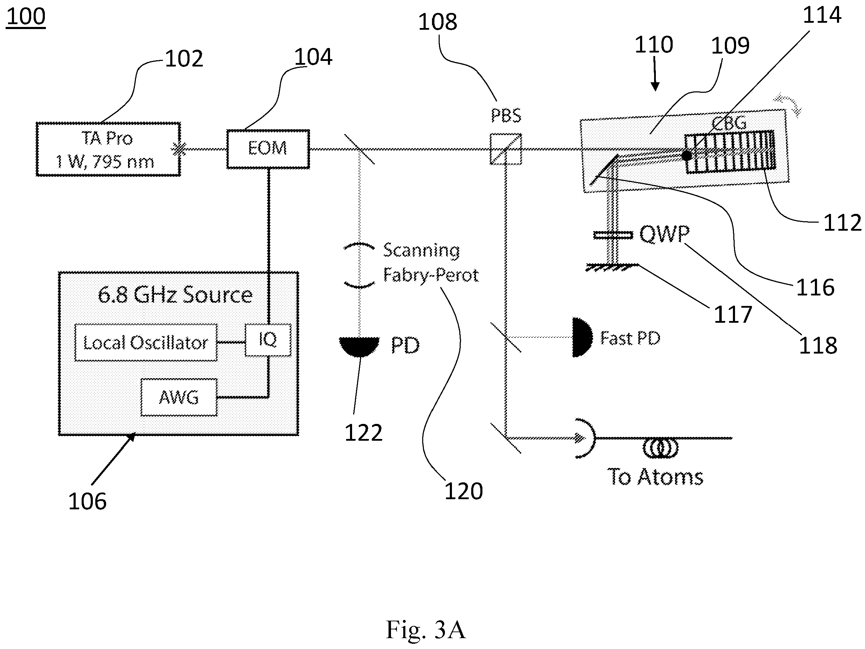

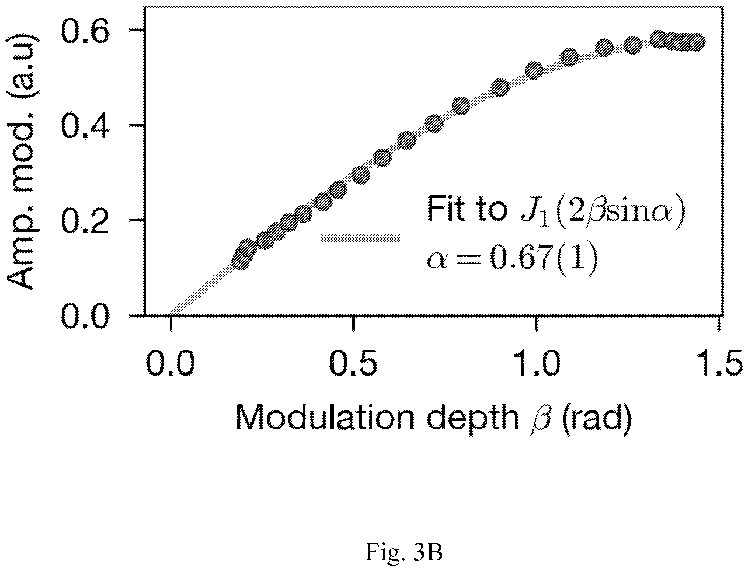

**Figs. 3A** **and** **3B** illustrate a laser system for driving Raman transitions, also referred to herein as a Raman laser system, using a chirped Bragg grating.

**Fig. 3A** is a schematic diagram of a device **100** that utilizes a chirped Bragg grating (CBG) 112. A laser source **102** *(e.g.,* Toptica TA Pro with 1 Watt of power at 795 nm) is directed onto an electro-optic modulator (EOM) 104 to produce phase modulation according to a microwave source **106** (here, 6.8 GHz). The phase modulated light is horizontally polarized and directed through a polarizing beam splitter (PBS) **108** and onto the dispersive element **110.** In the embodiment shown, dispersive element **110** comprises CBG 112. Dispersive element **110** is mounted so that it can rotate around axis **114.** Such rotation permits tuning wavelength selectivity.

The constituent frequency components of the phase-modulated beam are spatially separated on the dispersive element (due here to reflection at different depths within the CBG). All frequency components are reflected by mirror **116,** and then retroreflected by a final mirror **117,** such that they retrace their path through the CBG **112** and merge back into the same spatial mode, but each with a different phase shift. On this retroreflection pathway, the laser passes twice through a quarter-wave plate (QWP) **118** such that after the second reflection from the CBG the laser field is now vertically polarized and reflects downwards from the PBS **108.** At this point, all spectral components are recombined into the same spatial mode but with phase shifts that cause this beam to now be amplitude modulated. The light is fiber coupled and brought to the atoms. Small portions of the laser are picked off and measured on diagnostic equipment, such as a scanning Fabry-Perot **120** which includes a photodetector (PD) **122** for measuring the sideband spectrum of the laser as well as a fast photodetector.

In the embodiment **100** shown in **Fig. 3A****,** CBG **112** and mirror **116** are mounted on a rotation stage **109** with its pivot (axis **114)** aligned to the entrance facet of the CBG 112.

**Fig. 3B** shows that the amplitude modulation depends on both the dispersion of the CBG as well as the phase modulation depth. This is used to verify that the dispersive element is indeed approximately as dispersive as expected and is used as a diagnostic.

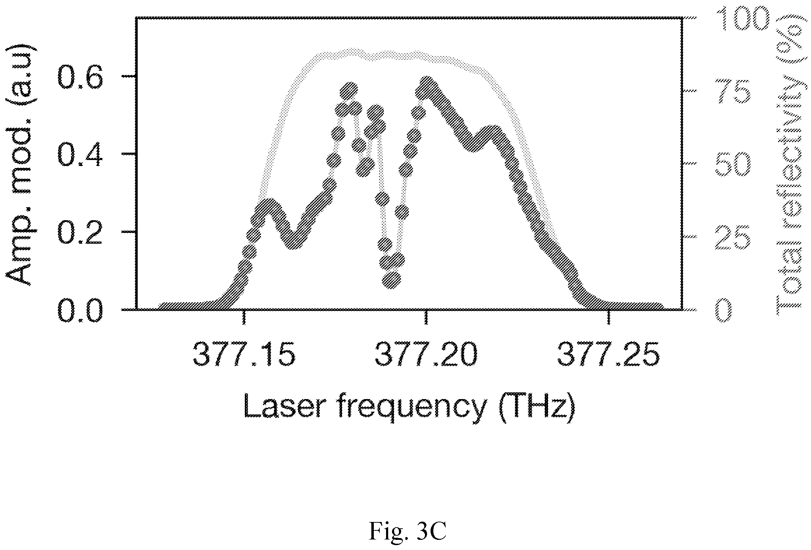

**Fig. 3C** is a plot of amplitude modulation as a function of detuning (green curve), demonstrating the effect associated with non-uniform dispersion. Although an ideal device would have constant performance over its whole bandwidth, the demonstrated curve is sufficiently flat in operational frequency windows to be stable. The overall reflectivity of the CBG in the device **100** shown in **Fig. 3A** is shown in gray and is nearly constant at ~85% over the entire 50 GHz bandwidth of the device, indicating low loss of optical power as designed.

Although the above description referred to a chirped Bragg grating, a skilled person would understand that other dispersive elements can be used. Examples include an optical fiber, a photonic crystal fiber, a chirped Bragg mirror (CBM), or an overcoupled optical resonator.

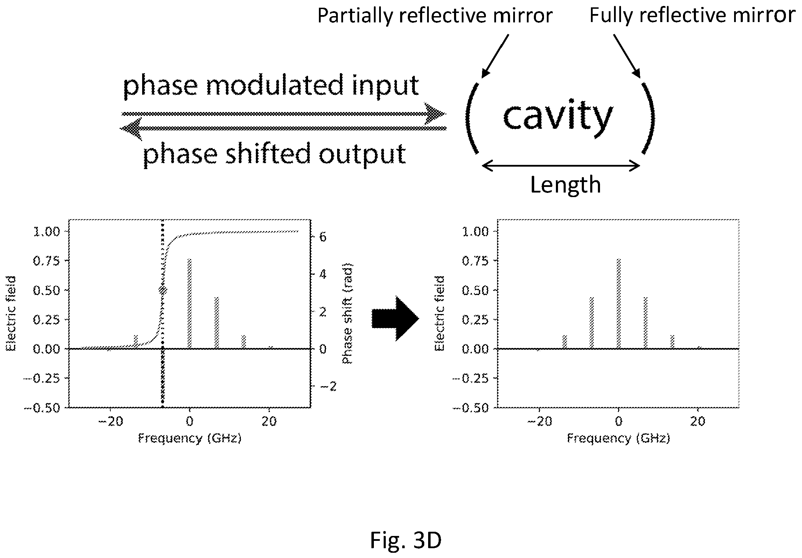

An overcoupled optical resonator is specifically illustrated in **Fig. 3D****.** As shown, the overcoupled optical resonator includes two mirrors, a fully reflective one and a partially reflective one, enclosing a cavity having length L (upper panel). Depending on the center frequency of the phase-modulated input light (lower left panel), length L can be adjusted to match a resonant condition for the side-band whose phase is to be shifted (the side-band having negative electric field in the lower left panel). The output of the overcoupled resonator is shown in the lower right panel. As can be seen, the phase of the desired side-band was shifted by π.

### Raman laser setup

Raman laser system (shown in **Fig. 3A****)** was sourced from a tapered amplifier system which outputs up to 1.5 *W* of fiber-coupled optical power at 795 *nm* (Toptica TA Pro). This light is phase-modulated by a free-space resonant electro-optic modulator (EOM) from Qubig. The EOM is driven by a 6.8~GHz microwave source, which consists of a local oscillator (Stanford Research Systems, SG384) that is IQ-modulated by an arbitrary waveform generator (Spectrum Instrumentation) to achieve arbitrary frequency, phase, and amplitude control of the phase modulation signal. As used herein, "I" refers to 'in-phase' and "Q" refers to 'quadrature'. IQ-modulation is a standard type of modulation that can be used to modulate frequency, phase, or amplitude of an input signal.

The laser was then reflected twice from a chirped Bragg grating to recombine the plurality of frequency components and thereby convert phase modulation to amplitude modulation, and the output was gated by an acousto-optic modulator (AOM) and coupled into a single-mode fiber. The phase modulation depth β is measured by a pickoff onto a scanning Fabry-Perot cavity, and the resulting amplitude modulation was characterized on a fast photodetector (PD).

The operational bandwidth of the CBG is 50 *GHz;* angle tuning of the CBG around the 3° target angle of incidence allowed shifting of this bandwidth relative to the laser frequency. While the CBG nominally has a uniform dispersion within its bandwidth, it was found that in practice the dispersion oscillates within its finite bandwidth; for this reason, it is helpful to have fine control of the incident angle and to monitor the resulting amplitude modulation while tuning the angle.

Proper retroreflection of the light following the first reflection from the CBG is important to ensure that subsequent alignments remain correct while tuning the CBG angle. This is further complicated by the fact that the different spectral components of laser light penetrate different depths within the CBG and therefore spatially separate; preserving beam spatial mode requires these different spectral components to properly recombine after retroreflection and the second pass through the CBG. The approach employed here was to mount both the CBG and a pickoff mirror on the same rotation stage, where the center of the CBG is at the origin of the rotation stage. The final retroreflection mirror was aligned once and fixed in place; with proper alignment, retroreflection was then satisfied for all rotation stage angles and alignment with the rest of the setup remains unchanged.

After optimizing the CBG angle to maximize amplitude modulation (as measured on the fast photodiode), the dependence of amplitude modulation on the phase modulation depth was experimentally measured to confirm the expected Bessel function relationship from Equation and to extract the dispersion coefficient **(****Fig. 3B****).** Finally, at full modulation depth, the amplitude modulation was measured as the laser frequency was scanned across the bandwidth of the CBG to assess sensitivity to drifts of the free-running laser or the angle of the CBG **(****Fig. 3C****).**

### Benchmarking Raman laser system on neutral atom arrays

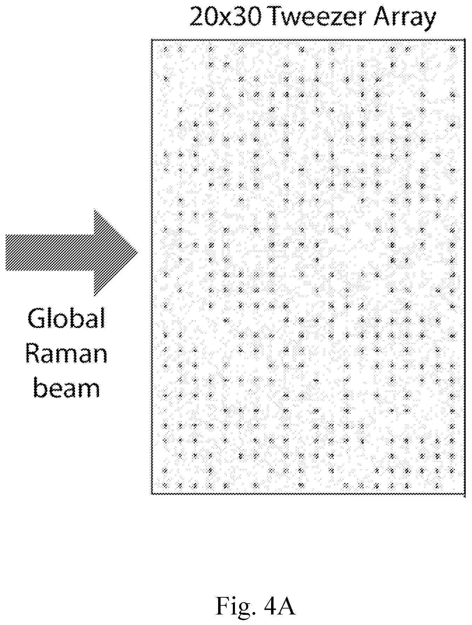

The high-power Raman laser system was tested on neutral ⁸⁷Rb atoms that were randomly loaded within an array of 600 optical tweezers in two dimensions, arranged in a 100-*µm* × 200-*µm* rectangle **(****Fig. 4A****).** The optical tweezers were linearly polarized and had a wavelength of 809nm. Atoms were imaged on an electron-multiplied CCD (EMCCD) camera to detect their loaded positions, and their final states *(i.e.,* the |0) states) were read out by a second fluorescence image after pushing out atoms in *F* = 2 *(i.e.,* the |1) states) by cycling photons on the *D*₂ transition *F* = 2 → *F'* = 3. During loading and imaging, the tweezers had a trap depth of 14 *MHz.* During Raman driving, the trap depths were lowered to *5 MHz* and a 8.5-G magnetic field was applied.

The Raman laser illuminated the atom plane from the side and was cylindrically focused onto the atoms, resulting in an elliptical beam with waists of 40 *µm* and 560 *µm* on the thin axis and the tall axis, respectively, with a total average optical power of 150 *mW* on the atoms. The large vertical extent ensures homogeneity across the atoms without more complicated beam-shaping techniques. The laser is *σ*⁺ polarized and tuned 100 *GHz* blue-detuned of the 795-nm transition to the 5*P*_{1/2} excited state. By tuning the EOM drive frequency, the Raman laser can resonantly drive *π*-polarized spin transitions in the ground state hyperfine manifold. Raman-assisted optical pumping was used to prepare atoms in |0〉 *=* |*F =* 1, *m_{F}* = 0〉. Subsequently, the EOM drive frequency was tuned into resonance with the clock frequency *(i.e., ω_{q}*/2*π*=6.83 GHz), and atoms were coupled from |0〉 to |1〉 *=* |*F* = 2, *m_{F}* = 0〉.

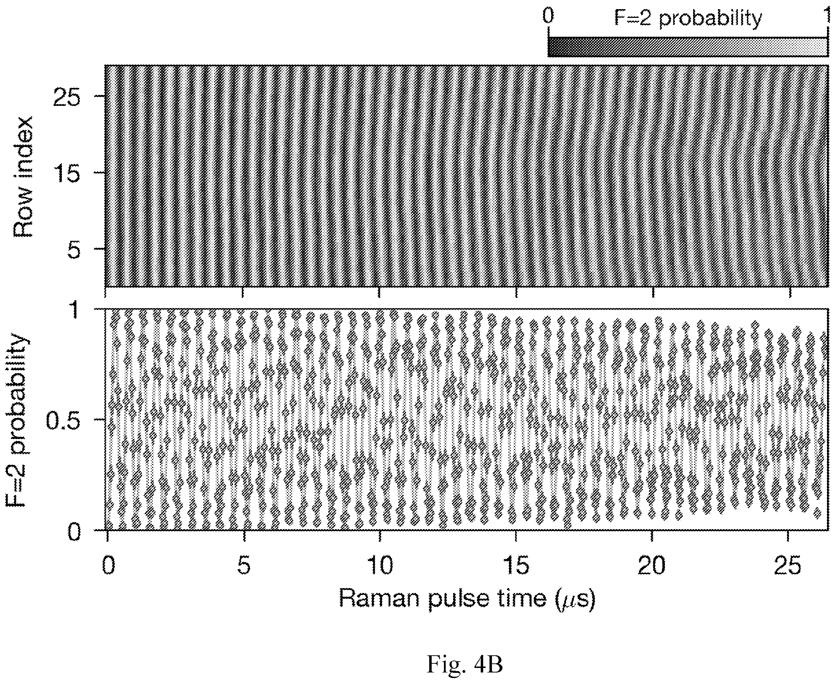

The qubit array was globally driven and Rabi oscillations were measured across the array with frequency *Ω_{eff}* = 1.95 *MHz.* Rabi oscillations were measured individually for each row of the array **(****Fig. 4B****,** upper panel), as well as averaged over the middle four rows **(****Fig. 4B****,** lower panel). Rabi oscillations decay due to inhomogeneity across the array and small (≲ 1%) power fluctuations.

**Figs. 4A** **though 4C** illustrate Raman driving of ⁸⁷Rb atoms in an optical tweezer array. **Fig. 4A** shows sample fluorescence image of ~ 300 atoms individually loaded into a 20x30 optical tweezer array. The Raman laser globally illuminates the array.

**Fig. 4B** is a collection of two images showing characteristic Rabi oscillations between qubit states. Atoms are initialized in |0> = |F=1, mF=0>, and for each time-point *t* in these plots the Raman laser is applied for that specific duration, after which the probability for atoms to have been transferred to |1> *=* |F=2, mF=0> is measured. Each experiment is run several times with the results averaged together to measure the probability of transfer after a laser pulse of length *t*. In the upper plot, the atoms within each row of the system are treated as identical, and the oscillations of each row of the tweezer array are separately plotted as each row of this heat map (with the color indicating the probability of transfer to F=2). In the lower plot, the atoms in the middle four rows are treated as identical and averaged together to characterize the 'typical' Rabi oscillation performance for atoms in the middle of the array. The measured Rabi frequency is 1.95 MHz. The decay is caused primarily by inhomogeneous averaging across the system.

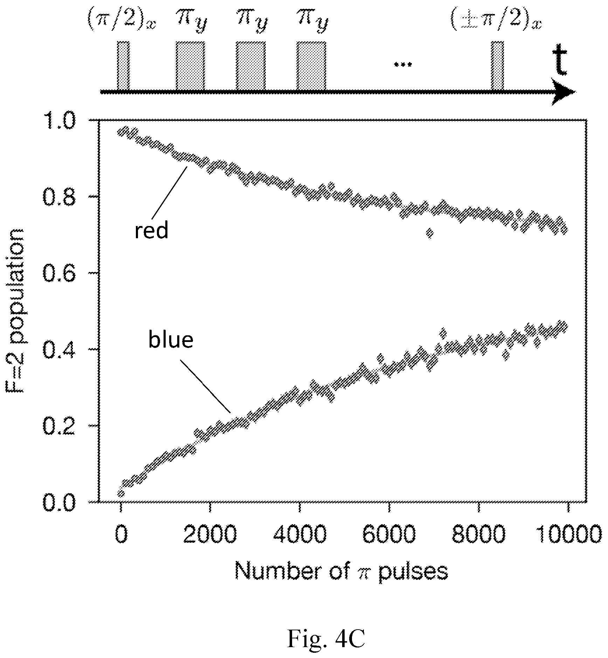

**Fig. 4C** shows the use of a Car-Purcell-Meiboom-Gill (CPMG) pulse train to measure how many pulses can be applied before scattering from the Raman laser causes *T*₁-type decay. Two measurements are compared in which the final *π*/2 pulse is applied along *+x* (red) or *-x* (blue). The probability of error per *π*-pulse due to photon scattering is extracted from this plot.

For Raman operation with hyperfine qubits, there is a fundamental tradeoff between Raman Rabi frequency (∝ Ω²/2Δ) and incoherent scattering processes (∝ Γ[Ω²/4Δ²]). For a given target Rabi frequency, higher optical power enables working at a larger intermediate detuning, increasing the ratio of Rabi frequency to scattering rate (proportional to the coherence metric tabulated in **Fig. 2C****).** To evaluate this coherence limitation for the AM-modulation system, a (*π*/2)*ₓ* pulse was applied followed by a train of *π_{y}* pulses **(****Fig. 4C****);** this so-called CPMG sequence is robust to pulse miscalibrations that limit observed Rabi coherence time. By varying the total number of *π_{y}* pulses, a *T*₁-type decay from scattering is observed, with a characteristic 1/e scale of 7852 ± 76 pulses. This decay constant sets a lower bound on the scattering-limited *π* pulse fidelity of 0.999873(1).

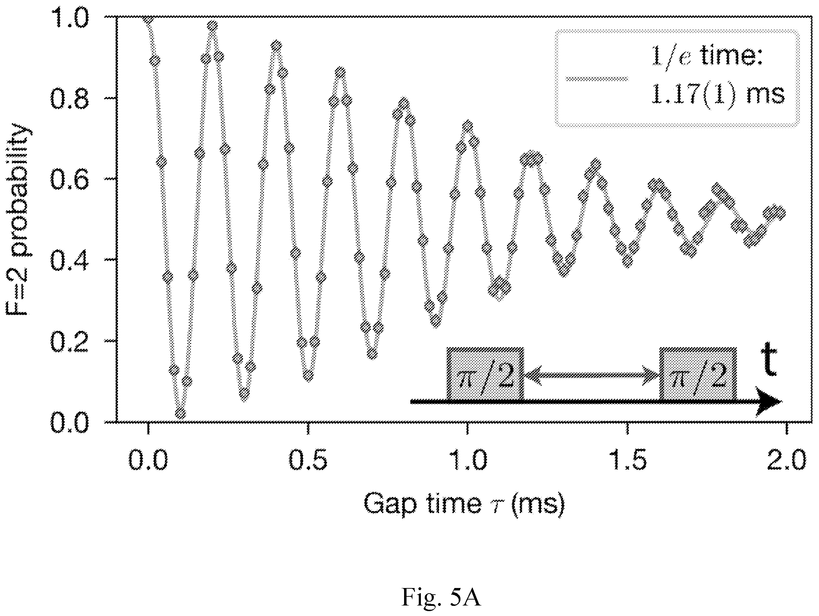

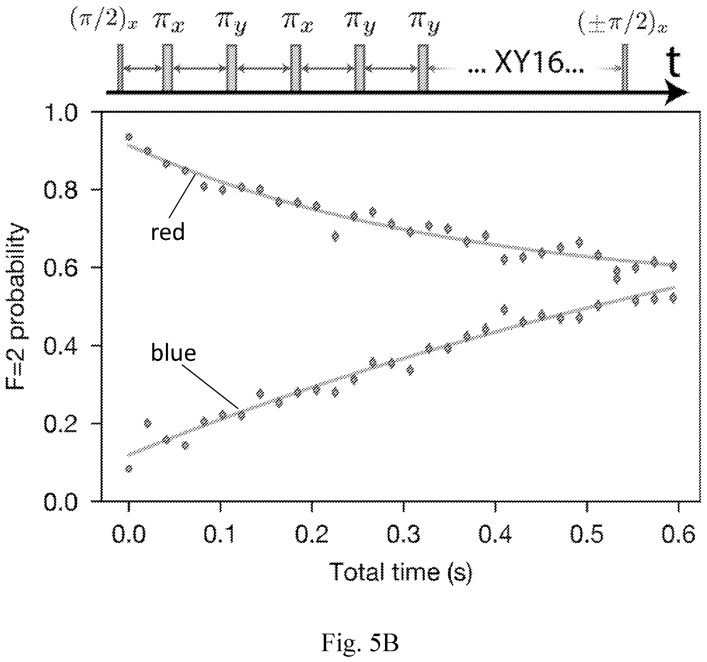

Having established a high Rabi frequency and a large number of possible operations in the system, its utility in preserving coherence across the array was explored for practical use in quantum information processing protocols. First, the coherence in tweezers was benchmarked by measuring a Ramsey ${T}_{2}^{∗} = 1.17 \left(1\right) ms$, limited by the finite atomic temperature and small differential light shifts in the tweezers **(****Fig. 5A****).** By applying a train of *π* pulses, the atomic qubits were dynamically decoupled from noise sources such as the tweezer differential light shifts and extend the coherence time to *T*₂ = 303(13)ms, showing second-timescale coherence across hundreds of qubits **(****Fig. 5B****).** The *π* pulses were applied according to the XY16-256 pulse sequence (a sequence of *π* pulses, applied about the axes: +x, +y, +x, +y, +y, +x, +y, +x, and then -x, -y, -x, -y, -y, - x, -y, -x looped for a total of 256 pulses), which is robust against pulse imperfections for generic initial superposition states. The qubit coherence after the variable-time pulse train is presently limited by residual pulse imperfections, residual dephasing (e.g., fast magnetic field noise or noise on tweezer light shifts), and the ~ 0.5-second *T*₁ time associated with off-resonant scattering from the optical tweezers. Coherence can be further improved by applying more *π* pulses and by using further-detuned optical tweezers (the *T*₁ exhibits a favorable 1/Δ³ scaling).

Since state-of-the-art Rydberg-based entangling operations are sub-microsecond timescale, and Raman-based single-qubit rotations are also sub-microsecond timescale, the second-scale quantum coherence will allow for a wide variety of deep quantum circuits with hundreds of qubits. Moreover, together with the demonstrated dynamical decoupling sequences, this system should support new approaches for quantum algorithms involving dynamic reconfiguration of atom arrays while preserving coherence.

Referring to **Figs. 5A** **and** **5B****,** the idle coherence of atoms in optical tweezers is illustrated.

**Fig. 5A** is a plot showing the results of a Ramsey measurement. As used herein, in a Ramsey measurement, atoms are placed into superposition states for variable time before returning to the initial state. The laser detuning during the hold time results in fringes with a frequency equal to the detuning. In the experiment described here, atoms are placed in a superposition of |0> and |1> using a π/2 pulse and held for variable amounts of time before a final π/2 pulse. The relative phase between |0> and |1> is measured relative to the 6.8 GHz local oscillator, with a 5 kHz frequency added to the local oscillator. The measurement results show 5 kHz oscillations with a Gaussian decay envelope, where the decay envelope characterizes one key coherence metric of the atoms (T₂*). The measurement shows decay because the atoms occupy several vibrational levels within the tweezers that have different average differential light shifts on the qubit transition, resulting in dephasing.

**Fig. 5B** shows a dynamical decoupling sequence using XY16-256, with a total of 256 *π* pulses. The final π/2 pulse is applied about *+x* (red) or *-x* (blue). These two curves converge with a fitted *T*₂ = 303(13)*ms*.

Stimulated Raman transitions are an important ingredient in the toolbox for quantum computation with neutral atoms and trapped ions. While several schemes have been used previously to drive Raman transitions, the dispersive approach offers several advantages. First and foremost, the system is passively stable, and faithfully maps the microwave signal which drives the EOM to the resulting amplitude modulation of the laser field. In contrast, other schemes either require active stabilization of an interferometer, active locking of the repetition rate of a mode-locked laser, or stabilization of the frequency offset between two combs. The dispersive approach is additionally more efficient in its use of optical power compared with other approaches using phase modulators. While the efficiency is still lower than that of a mode locked laser, the experimental simplicity, stability, and low cost make it an attractive alternative.

This dispersive approach can additionally be used for applications in which stimulated Raman transitions are used to couple the atomic spin to motion, such as for Raman sideband cooling or entangling gates in trapped ion systems. Akin to the approach with mode locked lasers, the amplitude modulation would be tuned away from the qubit transition, and the light would be split into two non-co-propagating optical pathways, with a global frequency shift added to one of the two pathways.

Finally, local addressing optics could be used to outcouple the amplitude modulated laser onto individual atoms in the array. Devices such as spatial light modulators could be used to illuminate several traps in parallel, albeit with slow switching. Alternatively, acousto-optic or electro-optic modulator arrays could enable fast switching of Raman light on individual traps. These operations can be integrated with multi-qubit gates based on Rydberg interactions to realize flexible quantum circuits.

### Formation of Array of Particles Using Optical Tweezers

Optical trapping of neutral atoms is a powerful technique for isolating atoms in vacuum. Atoms are polarizable, and the oscillating electric field of a light beam induces an oscillating electric dipole moment in the atom. The associated energy shift in an atom from the induced dipole, averaged over a light oscillation period, is called the AC Stark shift. Based on the AC Stark shift induced by light that is detuned *(i.e.,* offset in wavelength) from atomic resonance transitions, atoms are trapped at local intensity maxima (for red detuned, that is, longer wavelength trap light), because the atoms are attracted to light below the resonance frequency. The AC Stark shift is proportional to the intensity of the light. Thus, the shape of the intensity field is the shape of an associated atom trap. Optical tweezers utilize this principle by focusing a laser to a micron-scale waist, where individual atoms are trapped at the focus. Two-dimensional (2D) arrays of optical tweezers are generated by, for example, illuminating a spatial light modulator (SLM), which imprints a computer-generated hologram on the wavefront of the laser field. The 2D array of optical tweezers is overlapped with a cloud of laser-cooled atoms in a magneto-optical trap (MOT). The tightly focused optical tweezers operate in a "collisional blockade" regime, in which single atoms are loaded from the MOT, while pairs of atoms are ejected due to light-assisted collisions, ensuring that the tweezers are loaded with at most single atoms, but the loading is probabilistic, such that the trap is loaded with a single atom with a probability of about 50-60%.

To prepare deterministic atom arrays, a real-time feedback procedure identifies the randomly loaded atoms and rearranges them into pre-programmed geometries. Atom rearrangement requires moving atoms in tweezers which can be smoothly steered to minimize heating, by using, for example, acousto-optic deflectors (AODs) to deflect a laser beam by a tunable angle which is controlled by the frequency of an acoustic waveform applied to the AOD crystal. Dynamic tuning of the acoustic frequency translates into smooth motion of an optical tweezer. A multi-frequency acoustic wave creates an array of laser deflections, which, after focusing through a microscope objective, forms an array of optical tweezers with tunable position and amplitude that are both controlled by the acoustic waveform. Atoms are rearranged by using an additional set of dynamically moving tweezers that are overlaid on top of the SLM tweezer array.

### Exemplary Hardware

Optical tweezer arrays constitute a powerful and flexible way to construct large scale systems composed of individual particles. Each optical tweezer traps a single particle, including, but not limited to, individual neutral atoms and molecules for applications in quantum technology. Loading individual particles into such tweezer arrays is a stochastic process, where each tweezer in the system is filled with a single particle with a finite probability p<1, for example p~0.5 in the case of many neutral atom tweezer implementations. To compensate for this random loading, real-time feedback may be obtained by measuring which tweezers are loaded and then sorting the loaded particles into a programmable geometry. This may be performed by moving one particle at a time, or in parallel.

Parallel sorting may be achieved by using two acousto-optic deflectors (AODs) to generate multiple tweezers that can pick up particles from an existing particle-trapping structure, move them simultaneously, and release them somewhere else. This can include moving particles around within a single trapping structure (e.g., tweezer array) or transporting and sorting particles from one trapping system to another (e.g., between one tweezer array and another type of optical/magnetic trap). This sorting is flexible and allows programmed positioning of each particle. Each movable trap is formed by the AODs and its position is dynamically controlled by the frequency components of the radiofrequency (RF) drive field for the AODs. Since the RF drive of the AODs can be controlled in real time and can include any combination of frequency components, it is possible to generate any grid of traps (such as a line of arbitrarily positioned traps), move the rows or columns of the grid, and add or remove rows and columns of the grid, by changing the number, magnitude, and distribution of the frequency components in the RF drive fields of the AODs.

In an exemplary embodiment, an optical tweezer array is created using a liquid crystal on silicon spatial light modulator (SLM), which can programmatically create flexible arrangements of tweezers. These tweezers are fixed in space for a given experimental sequence and loaded stochastically with individual atoms, such that each tweezer is loaded with probability *p* ~ *0.5.* A fluorescence image of the loaded atoms is taken, to identify in real-time which tweezers are loaded and which are empty.

After detecting which tweezers are loaded, movable tweezers overlapping the optical tweezer array can dynamically reposition atoms from their starting locations to fill a target arrangement of traps with near-unity filling. The movable tweezers are created with a pair of crossed AODs. These AODs can be used to create a single moveable trap which moves one atom at a time to fill the target arrangement or to move many atoms in parallel.

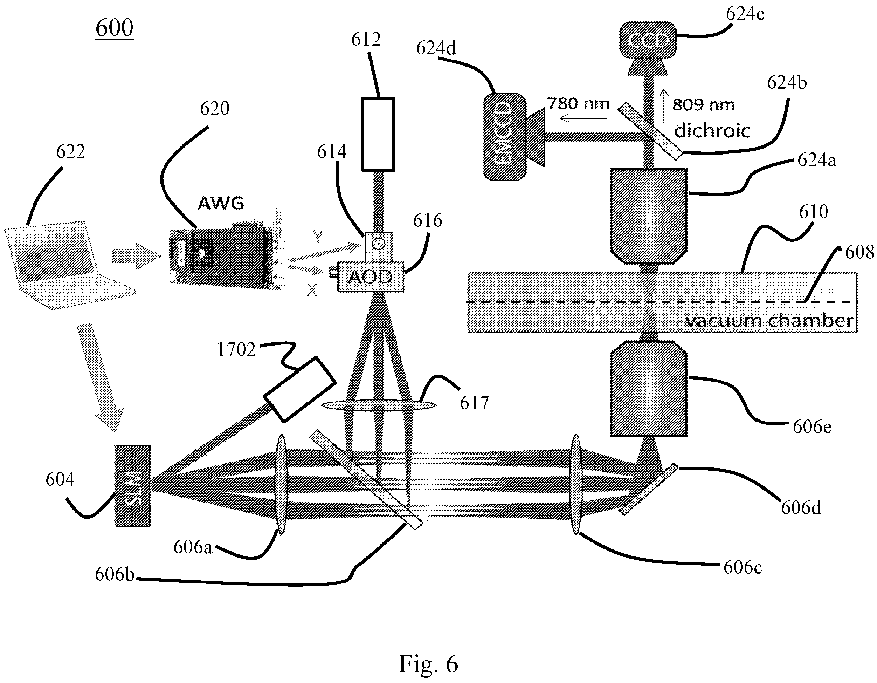

Referring to **Fig. 6****,** a schematic view is provided of an apparatus **600** for quantum computation according to embodiments of the present disclosure. As shown in **Fig. 6****,** using a beam generated by a light source **602** (for example, a coherent light source, in some example embodiments - a monochromatic light source), SLM **604** forms an array of trapping beams *(i.e.,* a tweezer array) which is imaged onto trapping plane **608** in vacuum chamber **610** by an optical train that, in the example embodiment shown in **Fig. 6****,** comprises elements **606a, 606c, 606d,** and a high numerical aperture (NA) objective **606e.** Other suitable optical trains can be employed, as would be easily recognized by a person of ordinary skill in the art. Using a beam generated by light source **612** (for example, a coherent light source; in some example embodiments - a monochromatic light source), a pair of AODs **614** and **616,** having non-parallel directions of acoustic wave propagation (for example, orthogonal directions) creates dynamically movable sorting beams. By using the optical train, such as the one depicted in **Fig. 6** (elements **617, 606b, 606c, 606d,** and **606e),** the sorting beams are overlapped with the trapping beams. It is understood that other optical train can be used to achieve the same result. For example, source **602** and **612** can be a single source, and the trapping beam and the sorting beam are generated by a beam splitter.

The dynamic movement of the steering beams is accomplished by employing two non-parallel AODs **614, 616,** arranged in series. In the example embodiment depicted in **Fig. 6****,** one AOD defines the direction of "rows" ("horizontal" - the 'X' AOD) and the other AOD defines the direction of "columns" ("vertical" - the 'Y' AOD). Each AOD is driven with an arbitrary RF waveform from an arbitrary waveform generator **620,** which is generated in real-time by a computer **622** which processes the feedback routine after analyzing the image of where atoms are loaded. If each AOD is driven with a single frequency component, then a single steering beam ("AOD trap") is created in the same plane **608** as the SLM trap array. The frequency of the X AOD drive determines the horizontal position of the AOD trap, and the frequency of the Y AOD drive determines the vertical position; in this way, a single AOD trap can be steered to overlap with any SLM trap.

In **Fig. 6****,** laser **602** projects a beam of light onto SLM **604.** SLM **604** can be controlled by computer **622** in order to generate a pattern of beams ("trapping beams" or "tweezer array"). The pattern of beams is focused by lens **606a,** passes through mirror **606b,** and is collimates by lens **606c** on mirror **606d.** The reflected light passes through objective **606e** to focus an optical tweezer array in vacuum chamber **610** on trapping plane **608.** The laser light of the optical tweezer array continues through objective **624a,** and passes through dichroic mirror **624b** to be detected by charge-coupled device (CCD) camera **624c.**

Vacuum chamber **610** may be illuminated by an additional light source (not pictured). Fluorescence from atoms trapped on the trapping plane also passes through objective **624a,** but is reflected by dichroic mirror **624b** to electron-multiplying CCD (EMCCD) camera **624d.**

In this example, laser **612** directs a beam of light to AODs **614, 616.** AODs **614, 616** are driven by arbitrary wave generator (AWG) **620,** which is in turn controlled by computer **622.** Crossed AODs **614, 616** emit one or more beams as set forth above, which are directed to focusing lens **617.** The beams then enter the same optical train **606b...606e** as described above with regard to the optical tweezer array, focusing on trapping plane **608.**

It will be appreciated that alternative optical trains may be employed to produce an optical tweezer array suitable for use as set out herein.

While this invention has been particularly shown and described with references to example embodiments thereof, it will be understood by those skilled in the art that various changes in form and details may be made therein without departing from the scope of the invention encompassed by the appended claims.

## Claims

1. A device (100) for modulating an amplitude of a light beam, comprising:
a coherent light source configured to generate a phase-modulated beam having a plurality of frequency components;
a dispersive optical element (110) selected from a chirped Bragg grating (112), a chirped Bragg mirror, or an overcoupled optical resonator,
the dispersive optical element (110) having a group delay dispersion, the dispersive optical element (110) configured to receive the phase-modulated beam, to introduce an optical phase shift to each of the plurality of the frequency components, wherein the values of the optical phase shift vary non-linearly with frequency according to the group delay dispersion, and to recombine the plurality of frequency components, thereby generating an amplitude-modulated beam.

2. A quantum computer device (600), comprising:
a source of particles;
a confinement system configured to generate a plurality of confinement regions to hold a plurality of particles therein, the particles having a first quantum state;
an excitation source for generating an amplitude-modulated beam and directing the amplitude-modulated beam to at least one particle in the plurality of particles, thereby driving transitions of the at least one particle between the first quantum state and a second quantum state; and
an observing system for determining the states of the plurality of particles,
wherein the excitation source comprises the device of Claim 1.

3. The device of Claims 1 or 2, further including a reflective element configured to direct the amplitude-modulated beam at the optically dispersive element, thereby amplifying the frequency-dependent group delay.

4. The device of Claims 1 or 2, wherein the coherent light source comprises a monochromatic coherent light source (102) and an electro-optical modulator (104).

5. The device of Claim 2, wherein the coherent light source is configured to direct the amplitude-modulated beam at at least two particles of the plurality of particles.

6. The device of Claim 2, wherein the coherent light source is configured to direct the amplitude-modulated beam at a single particle of the plurality of particles.

7. The device of any one of Claims 2-6, wherein the transitions of the at least one particle are Raman transitions.

8. A method of modulating an amplitude of a light beam, comprising:
generating a coherent phase-modulated light beam having a plurality of frequency components;
directing the phase-modulated beam at a dispersive optical element (110) selected from a chirped Bragg grating (112), a chirped Bragg mirror, or an overcoupled optical resonator, the dispersive optical element (110) having a group delay dispersion, thereby introducing an optical phase shift to each of the plurality of the frequency components, wherein the values of the optical phase shift vary non-linearly with frequency according to the group delay dispersion; and
recombining the plurality of frequency components, thereby generating an amplitude-modulated beam.

9. A method of operating a quantum computer device (600), the method comprising:
generating a plurality of confinement regions holding a plurality of particles therein, thereby generating a plurality of particles, the particles having a first quantum state;
generating an amplitude-modulated beam by the method of Claim 8;
directing the amplitude-modulated beam at at least one particle of the plurality of particles, thereby driving transitions of the at least one particle of the plurality of particles between the first quantum state and a second quantum state; and
determining the states of the plurality of particles.

10. The method of Claims 8 or 9, further including directing the amplitude-modulated beam at the optically dispersive element, thereby amplifying the frequency-dependent group delay.

11. The method of Claims 8 or 9, further comprising:
generating a monochromatic coherent light beam;
directing the monochromatic coherent light beam at an electro-optical modulator; and
modulating the phase of the monochromatic coherent light beam.

12. The method of Claim 9, wherein the amplitude-modulated beam is directed at at least two particles of the plurality of particles.

13. The method of Claim 9, wherein the amplitude-modulated beam is directed at a single particle of the plurality of particles.

14. The method of Claims 9-13, wherein the transitions of the at least one particle are Raman transitions.

## Patentansprüche

1. Vorrichtung (100) zum Modulieren einer Amplitude eines Lichtstrahls, umfassend:
eine kohärente Lichtquelle, die konfiguriert ist zum Erzeugen eines phasenmodulierten Strahls, der eine Vielzahl von Frequenzkomponenten aufweist;
ein dispersives optisches Element (110), das aus einem gechirpten Bragg-Gitter (112), einem gechirpten Bragg-Spiegel oder einem übergekoppelten optischen Resonator ausgewählt wird,
wobei das dispersive optische Element (110) eine Gruppenlaufzeitdispersion aufweist, wobei das dispersive optische Element (110) konfiguriert ist zum Empfangen des phasenmodulierten Strahls, um eine optische Phasenverschiebung in jede aus der Vielzahl von Frequenzkomponenten einzufügen, wobei die Werte der optischen Phasenverschiebung gemäß der Gruppenlaufzeitdispersion nichtlinear mit der Frequenz variieren, und um die Vielzahl von Frequenzkomponenten neu zu kombinieren, wodurch ein amplitudenmodulierter Strahl erzeugt wird.

2. Quantencomputervorrichtung (600), umfassend:
eine Teilchenquelle;
ein Einschlusssystem, das konfiguriert ist zum Erzeugen einer Vielzahl von Einschlussgebieten, in denen eine Vielzahl von Teilchen enthalten sind, wobei die Teilchen einen ersten Quantenzustand aufweisen;
eine Anregungsquelle zum Erzeugen eines amplitudenmodulierten Strahls und zum Richten des amplitudenmodulierten Strahls auf mindestens ein Teilchen in der Vielzahl von Teilchen, wodurch Übergänge des mindestens einen Teilchens zwischen dem ersten Quantenzustand und einem zweiten Quantenzustand angetrieben werden; und
ein Beobachtungssystem zum Ermitteln der Zustände der Vielzahl von Teilchen, wobei die Anregungsquelle die Vorrichtung nach Anspruch 1 umfasst.

3. Vorrichtung nach Anspruch 1 oder 2, die ferner ein reflektierendes Element beinhaltet, das konfiguriert ist, um den amplitudenmodulierten Strahl auf das optisch dispersive Element zu richten, wodurch die frequenzabhängige Gruppenlaufzeit verstärkt wird.

4. Vorrichtung nach Anspruch 1 oder 2, wobei die kohärente Lichtquelle eine monochromatische kohärente Lichtquelle (102) und einen elektrooptischen Modulator (104) umfasst.

5. Vorrichtung nach Anspruch 2, wobei die kohärente Lichtquelle konfiguriert ist, um den amplitudenmodulierten Strahl auf mindestens zwei Teilchen aus der Vielzahl von Teilchen zu richten.

6. Vorrichtung nach Anspruch 2, wobei die kohärente Lichtquelle konfiguriert ist, um den amplitudenmodulierten Strahl auf ein einzelnes Teilchen aus der Vielzahl von Teilchen zu richten.

7. Vorrichtung nach einem der Ansprüche 2 bis 6, wobei die Übergänge des mindestens einen Teilchens Raman-Übergänge sind.

8. Verfahren zum Modulieren einer Amplitude eines Lichtstrahls, umfassend:
Erzeugen eines kohärenten phasenmodulierten Lichtstrahls, der eine Vielzahl von Frequenzkomponenten aufweist;
Richten des phasenmodulierten Strahls auf ein dispersives optisches Element (110), das aus einem gechirpten Bragg-Gitter (112), einem gechirpten Bragg-Spiegel oder einem übergekoppelten optischen Resonator ausgewählt wird, wobei das dispersive optische Element (110) eine Gruppenlaufzeitdispersion aufweist, wodurch eine optische Phasenverschiebung in jede aus der Vielzahl von Frequenzkomponenten eingefügt wird,
wobei die Werte der optischen Phasenverschiebung gemäß der Gruppenlaufzeitdispersion nichtlinear mit der Frequenz variieren; und
Neukombinieren der Vielzahl von Frequenzkomponenten, wodurch ein amplitudenmodulierter Strahl erzeugt wird.

9. Verfahren zum Betreiben einer Quantencomputervorrichtung (600), wobei das Verfahren umfasst:
Erzeugen einer Vielzahl von Einschlussgebieten, in denen eine Vielzahl von Teilchen enthalten sind, wodurch eine Vielzahl von Teilchen erzeugt wird, wobei die Teilchen einen ersten Quantenzustand aufweisen;
Erzeugen eines amplitudenmodulierten Strahls durch das Verfahren nach Anspruch 8;
Richten des amplitudenmodulierten Strahls auf mindestens ein Teilchen aus der Vielzahl von Teilchen, wodurch Übergänge des mindestens einen Teilchens aus der Vielzahl von Teilchen zwischen dem ersten Quantenzustand und einem zweiten Quantenzustand angetrieben werden; und
Ermitteln der Zustände der Vielzahl von Teilchen.

10. Verfahren nach Anspruch 8 oder 9, das ferner ein Richten des amplitudenmodulierten Strahls auf das optisch dispersive Element beinhaltet, wodurch die frequenzabhängige Gruppenlaufzeit verstärkt wird.

11. Verfahren nach Anspruch 8 oder 9, das ferner umfasst:
Erzeugen eines monochromatischen kohärenten Lichtstrahls;
Richten des monochromatischen kohärenten Lichtstrahls auf einen elektrooptischen Modulator; und
Modulieren der Phase des monochromatischen kohärenten Lichtstrahls.

12. Verfahren nach Anspruch 9, wobei der amplitudenmodulierte Strahl auf mindestens zwei Teilchen aus der Vielzahl von Teilchen gerichtet wird.

13. Verfahren nach Anspruch 9, wobei der amplitudenmodulierte Strahl auf ein einzelnes Teilchen aus der Vielzahl von Teilchen gerichtet wird.

14. Verfahren nach einem der Ansprüche 9 bis 13, wobei die Übergänge des mindestens einen Teilchens Raman-Übergänge sind.

## Revendications

1. Dispositif (100) destiné à moduler une amplitude d'un faisceau de lumière, comprenant :
une source de lumière cohérente conçue pour générer un faisceau modulé en phase ayant une pluralité de composantes de fréquence ;
un élément optique dispersif (110) choisi parmi un réseau de Bragg à pas variable (112), un miroir de Bragg à pas variable et un résonateur optique surcouplé,
l'élément optique dispersif (110) présentant une dispersion de retard de groupe, l'élément optique dispersif (110) étant conçu pour recevoir le faisceau modulé en phase, pour introduire un déphasage optique dans chaque composante de la pluralité de composantes de fréquence,
les valeurs du déphasage optique variant de façon non linéaire avec la fréquence en fonction de la dispersion de retard de groupe, et pour recombiner la pluralité de composantes de fréquence, ce qui permet de générer un faisceau modulé en amplitude.

2. Dispositif informatique quantique (600), comprenant :
une source de particules ;
un système de confinement conçu pour générer une pluralité de régions de confinement afin d'y retenir une pluralité de particules, les particules ayant un premier état quantique ;
une source d'excitation destinée à générer un faisceau modulé en amplitude et acheminer le faisceau modulé en amplitude jusqu'à au moins une particule de la pluralité de particules, ce qui permet de provoquer des transitions de l'au moins une particule entre le premier état quantique et un deuxième état quantique ; et
un système d'observation destiné à déterminer les états de la pluralité de particules, la source d'excitation comprenant le dispositif de la revendication 1.

3. Dispositif de la revendication 1 ou 2, comportant en outre un élément réfléchissant conçu pour acheminer le faisceau modulé en amplitude jusqu'à l'élément optiquement dispersif, ce qui permet d'amplifier le retard de groupe dépendant de la fréquence.

4. Dispositif de la revendication 1 ou 2, dans lequel la source de lumière cohérente comprend une source de lumière cohérente monochromatique (102) et un modulateur électro-optique (104).

5. Dispositif de la revendication 2, dans lequel la source de lumière cohérente est conçue pour acheminer le faisceau modulé en amplitude jusqu'à au moins deux particules de la pluralité de particules.

6. Dispositif de la revendication 2, dans lequel la source de lumière cohérente est conçue pour acheminer le faisceau modulé en amplitude jusqu'à une seule particule de la pluralité de particules.

7. Dispositif de l'une quelconque des revendications 2 à 6, dans lequel les transitions de l'au moins une particule sont des transitions Raman.

8. Procédé de modulation d'une amplitude d'un faisceau de lumière, comprenant :
la génération d'un faisceau de lumière cohérente modulé en phase ayant une pluralité de composantes de fréquence ;
l'acheminement du faisceau modulé en phase jusqu'à un élément optique dispersif (110) choisi parmi un réseau de Bragg à pas variable (112), un miroir de Bragg à pas variable et un résonateur optique surcouplé, l'élément optique dispersif (110) présentant une dispersion de retard de groupe, introduisant ainsi un déphasage optique dans chaque composante de la pluralité de composantes de fréquence, les valeurs du déphasage optique variant de façon non linéaire avec la fréquence en fonction de la dispersion de retard de groupe ; et
la recombinaison de la pluralité de composantes de fréquence, ce qui permet de générer un faisceau modulé en amplitude.

9. Procédé de fonctionnement d'un dispositif informatique quantique (600), le procédé comprenant :
la génération d'une pluralité de régions de confinement retenant à l'intérieur une pluralité de particules, ce qui permet de générer une pluralité de particules, les particules ayant un premier état quantique ;
la génération d'un faisceau modulé en amplitude par le procédé de la revendication 8 ;
l'acheminement du faisceau modulé en amplitude jusqu'à au moins une particule de la pluralité de particules, ce qui permet de provoquer des transitions de l'au moins une particule de la pluralité de particules entre le premier état quantique et un deuxième état quantique ; et la détermination des états de la pluralité de particules.

10. Procédé de la revendication 8 ou 9, comportant en outre l'acheminement du faisceau modulé en amplitude jusqu'à l'élément optiquement dispersif, ce qui permet d'amplifier le retard de groupe dépendant de la fréquence.

11. Procédé de la revendication 8 ou 9, comprenant en outre :
la génération d'un faisceau de lumière cohérente monochromatique ;
l'acheminement du faisceau de lumière cohérente monochromatique jusqu'à un modulateur électro-optique ; et
la modulation de la phase du faisceau de lumière cohérente monochromatique.

12. Procédé de la revendication 9, dans lequel le faisceau modulé en amplitude est acheminé jusqu'à au moins deux particules de la pluralité de particules.

13. Procédé de la revendication 9, dans lequel le faisceau modulé en amplitude est acheminé jusqu'à une seule particule de la pluralité de particules.

14. Procédé des revendications 9 à 13, dans lequel les transitions de l'au moins une particule sont des transitions Raman.
